Europäisches Patentamt

European Patent Office

Office européen des brevets

(11) Veröffentlichungsnummer : **0 020 946**
**B1**

# (12) EUROPÄISCHE PATENTSCHRIFT

(45) Veröffentlichungstag der Patentschrift :
07.12.83

(21) Anmeldenummer : 80102373.0

(22) Anmeldetag : 02.05.80

(51) Int. Cl.³ : **C 08 G 69/16, B 01 J 19/18**

(54) **Verfahren zur kontinulerllchen Herstellung von Polycaprolactam sowie eine Vorrichtung zur Durchführung des Verfahrens.**

(30) Priorität : 10.05.79 DE 2918828

(43) Veröffentlichungstag der Anmeldung :
07.01.81 Patentblatt 81/01

(45) Bekanntmachung des Hinweises auf die Patenterteilung : 07.12.83 Patentblatt 83/49

(84) Benannte Vertragsstaaten :
BE CH DE FR GB IT LI NL

(56) Entgegenhaltungen :
DD-A-   24 279
DD-A-   120 455
US-A- 3 565 866

(73) Patentinhaber : **BASF Aktlengesellschaft
Carl-Bosch-Strasse 38
D-6700 Ludwigshafen (DE)**

(72) Erfinder : **Rotzoll, Rudl-Helnz, Dr.
Donnersbergstrasse 8
D-6703 Llmburgerhof (DE)** ·
Erfinder : **Matthles, Paul, Dr.
Truebnerstrasse 59
D-6900 Heidelberg 1 (DE)**
Erfinder : **Valentln, Guenter
Pfarrer-Friedrich-Strasse 30
D-6700 Ludwigshafen 29 (DE)**
Erfinder : **Hoerauf, Werner, Dr.
Homburger Strasse 10
D-6700 Ludwigshafen (DE)**

Verfahren zur kontinuierlichen Herstellung von Polycaprolactam sowie eine Vorrichtung zur Durchführung des Verfahrens

Gegenstand der Erfindung ist ein kontinuierliches Verfahren zur Herstellung von Polycaprolactam durch Polymerisation von ε-Caprolactam in einem senkrecht stehenden von oben nach unten durchströmten Rohrreaktor, bei dem ε-Caprolactam bei polyamidbildenden Temperaturen in einer mechanisch durchmischten Reaktionszone teilweise polymerisiert und in weiteren Reaktionszonen mit reversiblem Wärmeaustausch bis zum gewünschten Polymerisationsgrad weiter polymerisiert wird und dann Polycaprolactam schmelzflüssig ausgetragen wird sowie eine Vorrichtung zur Durchführung des Verfahrens.

In der Technik wird Polycaprolactam durch Polymerisation von Caprolactam bei Temperaturen von 240 bis 300 °C in Polymerisationsrohren, sogenannten VK-Rohren, die auch in Zonen unterteilt sein können, hergestellt. Es wurden schon erhebliche Anstrengungen unternommen, das Polymerisationsverfahren zu verbessern und zu beeinflussen. Aus der DE-AS 14 95 198 ist ein Verfahren bekannt, bei dem man die Lactamschmelze in ein Polymerisationsrohr leitet, dessen oberstes Viertel einen größeren Durchmesser als die übrigen Teile des Polymerisationsrohres hat, die Lactamschmelze unter Rühren überwiegend in dem obersten Viertel polymerisiert und die Polylactamschmelze dann durch die im übrigen Teil des Rohres angeordneten reversiblen Wärmeaustauscher so abkühlt, daß die Temperatur im letzten Viertel des zylindrischen Rohres nur geringfügig über dem Erstarrungspunkt des Polylactams liegt. Durch dieses Verfahren werden zwar die Schwierigkeiten beim Zumischen von Zuschlägen am Kopf des VK-Rohres behoben, wie jedoch die Caprolactamschmelze schnell auf die erforderliche Reaktionstemperatur gebracht wird, ist nicht zu entnehmen. Es wird auch kein Hinweis gegeben, wie die Verweilzeit bei gleichbleibender Temperatur des Heizmediums verkürzt werden kann. Aus der DL-PS 120 455 ist auch schon eine Vorrichtung zur Polymerisation von Caprolactam mit Rührer und Wärmetauscher bekannt. In der gewählten Anordnung ist jedoch keine Zirkulation des Reaktionsgemisches im Wärmetauscher, d. h. ein Fließen von oben nach unten und von unten nach oben, vorgesehen.

Es war deshalb die technische Aufgabe gestellt, bei der Polymerisation von Caprolactam in einem senkrecht stehenden Reaktionsrohr die Reaktion so zu führen, daß die zugeführte Caprolactamschmelze rasch auf Reaktionstemperatur gebracht wird und kürzere Verweilzeiten erzielt werden.

Diese technische Aufgabe wird gelöst in einem Verfahren zur kontinuierlichen Herstellung von Polycaprolactam durch Polymerisation von ε-Caprolactam in einem senkrecht stehenden, von oben nach unten durchströmten Rohrreaktor, bei dem das ε-Caprolactam bei polyamidbildenden Temperaturen in einer mechanisch durchmischten Zone, die einen um 30 bis 80 % größeren Durchmesser hat als die übrige Teil des Rohrreaktors und die 25 bis 40 % des Volumens des Rohrreaktors umfaßt, zu 20-70 % polymerisiert und in weiteren Wärmeaustauschzonen bis zum gewünschten Polymerisationsgrad weiterpolymerisiert wird und dann Poly ε-caprolactam schmelzflüssig ausgetragen wird, wobei das Reaktionsgemisch im unteren Teil der mechanisch durchmischten Reaktionszone in einem Abstand vom Rührorgan, der dem 0.3 bis 1.5 fachen des Rohrdurchmessers entspricht, durch eine Wärmeaustauschzone zirkuliert.

Ferner ist ein Gegenstand der Erfindung eine Vorrichtung zur Durchführung des Verfahrens zur kontinuierlichen Herstellung von Polycaprolactam aus einem senkrecht stehenden Rohr mit einem Heizmantel außen, Öffnungen für die Zuführung von Caprolactamschmelze und die Ableitung von Dämpfen im oberen Ende und Einrichtungen zum Austragen des Polycaprolactams am unteren Ende, wobei die oberen 14 % bis oberen 21 % des Rohres einen 30 bis 80 % größeren Durchmesser aufweisen und im erweiterten Teil des Rohres ein Rührer und ein Wärmeaustauscher angeordnet ist und der restliche Teil des Rohres Einrichtungen zur Ausbildung eines gleichmäßigen Strömungsprofils sowie mindestens 2 Wärmeaustauscher aufweist, wobei ein Wärmeaustauscher oben im engen Teil des Rohres angeordnet ist und der Abstand zwischen Unterkante des Rührers und Oberkante des Wärmetauschers dem 0,3 bis 1,5fachen des Durchmessers des engen Teils des Rohres entspricht.

Das neue Verfahren hat den Vorteil, daß man ohne großen Aufwand auf einfache Weise, sei es bei einer Arbeitsweise ohne Druck oder unter erhöhtem Druck, Caprolactamschmelze schnell auf Reaktionstemperatur bringt und die Verweilzeit insgesamt verkürzt. Ein weiterer Vorteil besteht darin, daß dies bei gleichbleibender Temperatur des Heizmediums erzielt wird unter Vermeidung mehrerer getrennter Kreislaufeinrichtungen für das Heizmedium.

Die Polymerisation erfolgt in einem senkrecht stehenden, von oben nach unten durchströmten Rohrreaktor, wie er unter der Bezeichnung VK-Rohr in der Literatur vielfach beschrieben ist. In der ersten mechanisch durchmischten Reaktionszone, die 25 bis 40 % des Volumens des Rohrreaktors umfaßt, erfolgt eine teilweise Polymerisation, bei der die Caprolactamschmelze zu 20 bis 70 % in Polymerisat übergeht. Caprolactam wird zweckmäßig in schmelzflüssigem Zustand in diese erste Zone zugeführt und durch Wärmetauscher, z. B. Heizschlangen, auf polyamidbildende Temperaturen erhitzt. Vorteilhaft haben die oberen 14 % bis oberen 21 % des Rohres bezogen auf die gesamte Länge einen erweiterten Durchmesser, der um 30 bis 80 % insbesondere 30 bis 60 % größer ist als der des übrigen Rohrteils. Die Weiterpolymerisation bis zum gewünschten Polymerisationsgrad erfolgt in einer oder mehreren anschließenden Wärmeaustauschzonen. Der Austrag des schmelzflüssigen Caprolactams erfolgt beispielsweise über Austragsschnecken oder Zahnradpumpen. Das Polymerisat wird dann als Band oder Faden abgenommen und granuliert. Man kann aber auch eine Spinnanlage unmittelbar folgen lassen. Außen ist das VK-Rohr über seine gesamte Länge vorteilhaft mit gleichbleibender Temperatur beheizt.

Mit dem geschmolzenen Caprolactam werden in der Regel Initiatoren, beispielsweise AH-Salz, Aminocapronsäure oder insbesondere Wasser, zugeführt. Vorteilhaft wird Wasser als Initiator in einer Menge von 0,2 bis 2,0, vorzugsweise 0,3 bis 0,7 Gew.%, bezogen auf das eingesetzte Caprolactam angewandt. Überschüssiges Wasser wird aus der ersten Reaktionszone verdampft. Größere Mengen an Wasser, z. B. bis zu 15 % können in Sonderfällen angewandt werden, z. B. als Träger zur Einbringung von Zusätzen. Als solche Zusätze werden Kettenregler, Beschleuniger, modifizierende Comonomere, Stabilisatoren, Mattierungsmittel und andere Effektsubstanzen in bekannter Weise zugesetzt.

Erfindungsgemäß zirkuliert das Reaktionsgemisch (polymerisierende Caprolactamschmelze) im unteren Teil der mechanisch durchmischten Reaktionszone durch eine Wärmeaustauschzone. Das bedeutet, daß die mechanisch durchmischte Zone in den engen Teil des Rohres hineinreicht. Dies bedeutet auch, daß die Temperatur der polymerisierenden Caprolactamschmelze in der gesamten mechanisch durchmischten Zone praktisch identisch ist. Dies erzielt man dadurch, daß der Abstand der Wärmeaustauschzone im unteren Teil der mechanisch durchmischten Zone einen Abstand vom Rührorgan aufweist, der dem 0,3 bis 1,5fachen des Rohrdurchmessers entspricht. Der Rohrdurchmesser bezieht sich auf den engeren Teil des Rohres. Anschließend folgen weitere Wärmeaustauschzonen, z. B. 1 bis 3 weitere Zonen.

Die Polymerisation wird vorteilhaft in einem Temperaturbereich von 240 bis 300 °C durchgeführt. Wählt man eine Arbeitsweise unter atmosphärischem Druck, so hält man in der mechanisch durchmischten Reaktionszone eine Temperatur von vorteilhaft 245 bis 260 °C ein. In den darauf nachfolgenden Zonen wird die Temperatur in der Regel auf 240 bis 290 °C eingestellt. Wählt man eine Arbeitsweise unter erhöhtem Druck, z. B. von 0,2 bis 0,9 bar, vorzugsweise 0,25 bis 0,7 bar, hält man in der mechanisch durchmischten Zone eine Temperatur von vorzugsweise 260 bis 295 °C ein. In den darauf nachfolgenden Zonen wird dann die Temperatur zweckmäßig auf 240 bis 300 °C eingestellt. Die für den Überdruck angegebenen Zahlenwerte beziehen sich auf den Dampfraum über der ersten Reaktionszone. Der Druck in der Schmelze ist an jedem Punkt um den hydrostatischen Druck der darüber befindlichen Flüssigkeitssäule erhöht. Die Entspannung der Schmelze auf Normaldruck erfolgt beim Austrag aus dem Reaktionsrohr.

Der Dampfraum über der ersten Reaktionszone ist von Caprolactamdampf, Wasserdampf und evtl. als Spülgas verwendeten Inertgasen, z. B. Stickstoff erfüllt. Der gewünschte Überdruck kann durch entsprechende Erhöhung der Temperatur der ersten Reaktionszone erzeugt werden, indem man den Dampfraum gegen die Außenatmosphäre abschließt. Bei Verwendung von Spülgas kann man auch so verfahren, daß man zuerst den gewünschten Druck durch entsprechendes Aufpressen von Spülgas erzeugt und erst dann die gewünschte Temperatur einstellt. Zur Aufrechterhaltung des gewünschten Überdrucks kann man z. B. den Dampfraum über der Schmelze in der ersten Reaktionszone gegen die Atmosphäre in entsprechender Höhe abtauchen.

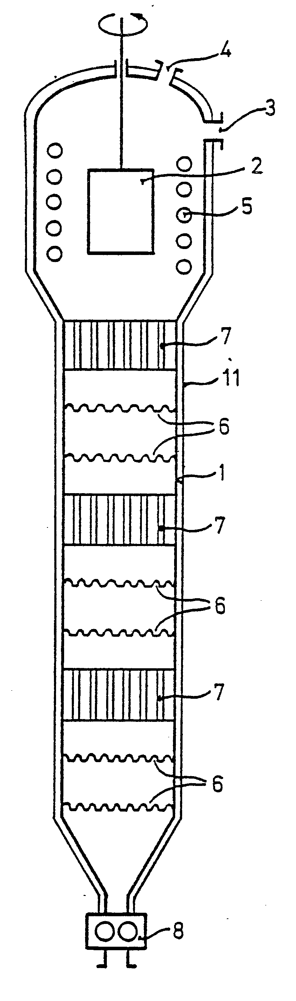

Eine geeignete Vorrichtung für die Durchführung des Verfahrens sei anhand der Figur erläutert :

1 bezeichnet ein Polymerisationsrohr, das im oberen Teil einen größeren Durchmesser aufweist.

2 ist ein Rührer mit Rührwelle.

3 ist die Zufuhröffnung für geschmolzenes Caprolactam und gegebenenfalls Zusätze.

4 ist eine Öffnung für die Ableitung von Dämpfen.

5 sind Wärmetauscher im erweiterten Teil des Polymerisationsrohres.

6 sind Einrichtungen zur Ausbildung eines gleichmäßigen Strömungsprofiles.

7 sind Wärmetauscher im engeren Teil des Polymerisationsrohres 1.

8 ist eine Einrichtung zum Austragen des Polycaprolactams.

11 ist ein Heizmantel.

Das Polymerisationsrohr 1 mit Heizmantel 11 ist zweckmäßig zylindrisch und hat im oberen Teil einen um 30 bis 80, vorteilhaft 30 bis 60 % größeren Durchmesser als der restliche Teil des Rohres. Der erweiterte Teil des Rohres umfaßt vorteilhaft 14 % bis 21 % der Länge des gesamten Reaktionsrohres. Oben, im erweiterten Teil befindet sich die Zufuhröffnung 3 für die Caprolactamschmelze, mit der außerdem Zuschlagstoffe, wie Mattierungsmittel, Stabilisatoren, Katalysatoren oder Extraktwässer, die bei der Extraktion von Polycaprolactam anfallen, zugeführt werden. Durch die Öffnung 4 werden Dämpfe, die bei der Polymerisation entstehen, beispielsweise Wasser in dampfförmiger Form entnommen. Mit dem Rührer 2 wird die polymerisierende Schmelze durchmischt und zugleich durch den nächsten darunter angeordneten Wärmetauscher (7) zirkuliert. Vorteilhaft wendet man hierfür einen Blattrührer an. Vorteilhaft ist Wärmetauscher 5 als Rohrschlangen ausgebildet, die mit einem Wärmeträgermedium, beispielsweise einen Gemisch aus Diphenyl und Diphenyloxid oder einem Wärmeträgeröl, beschickt werden. Der engere Teil des Polymerisationsrohres 1 weist Einrichtungen 6 zur Ausbildung eines gleichmäßigen Strömungsprofils auf. Solche Einrichtungen werden beispielsweise beschrieben in der DE-PS 11 36 310. Ferner weist der engere Teil des Rohres mindestens 2, vorteilhaft 2 bis 4 Wärmeaustauscher 7 auf, die wie der Wärmetauscher 5 mit geeigneten Wärmeträgern beschickt werden. Geeignete Wärmetauscher sind beispielsweise Röhrenwärmetauscher, wobei die Rohre vorteilhaft parallel zur Achse des Polymerisationsrohres angeordnet sind.

Erfindungsgemäß ist ein Wärmetauscher 7 oben im engen Teil des Rohres angeordnet, wobei der Abstand zwischen der Unterkante des Rührers und der Oberkante des Wärmetauschers das 0,3 bis 1,5fache des Durchmessers des engen Teiles des Rohres beträgt. Falls die Wärmetauscher 7 als Röhrenwärmetauscher ausgebildet sind, so hat sich als vorteilhaft erwiesen, wenn die Rohrlänge der Wärmetauscher 7 das 0,02-bis 0,08fache der Länge des gesamten Reaktionsrohres beträgt. Am unteren Ende des Rohres 1 befindet sich eine Einrichtung zum Austragen der Polycaprolactamschmelze, solche Einrichtungen sind beispielsweise Zahnradpumpen oder Förderschnecken.

Vorteilhaft enthält die Vorrichtung außerdem Einrichtungen zur Standhaltung des polymerisierenden Gemisches im Rohr 1, durch die der Zufluß des geschmolzenen Caprolactams und der übrigen Zusatzstoffe durch die Öffnung 3 geregelt wird. Darüber hinaus enthält die Vorrichtung vorteilhaft Einrichtungen zum Messen der Temperatur, die über die Länge des Polymerisationsrohres 1 verteilt sind.

Polycaprolactam wird zur Herstellung von geformten Gegenständen durch Spritzgießen, Extrudieren oder Verspinnen verwendet. Das Verfahren nach der Erfindung sei an folgenden Beispielen veranschaulicht.

Beispiel 1

Es wird ein VK-Rohr verwendet, das im oberen Teil einen größeren Durchmesser als im restlichen Teil des Rohres aufweist. Die Gesamtlänge des VK-Rohrs beträgt 16 m. Der obere erweiterte Teil hat eine Höhe von 2,5 m und einen Durchmesser von 1,6 m ; der engere Teil hat einen Durchmesser von 1,2 m. Das VK-Rohr ist mit einem Heizmantel versehen, der mit einem dampfförmigen Gemisch von Diphenyl und Diphenyloxid als Heizmedium beheizt ist. Der obere erweiterte Teil des VK-Rohrs besitzt einen Rührer, dessen Drehzahl 60 UpM beträgt, und Heizschlangen, die mit Diphenyl/Diphenyloxid-Dampf beheizt sind. Im engeren Teil des VK-Rohrs befinden sich zwei ebenfalls mit Diphenyl/Diphenyloxid-Dampf beheizte Rohrbündelwärmeaustauscher von 0,6 m Länge. Der obere Wärmeaustauscher ist mit seiner Oberkante 0,8 m von der Unterkante des Rührers entfernt. Dieser Abstand entspricht dem 0,7 fachen des Rohrdurchmessers. Das VK-Rohr wird stündlich mit einem Gemisch aus 800 kg Caprolactam und 4 kg Wasser beschickt. Die Temperatur des Heizmediums beträgt 275 °C. Das Polymerisierende Reaktionsgemisch zirkuliert unter der Wirkung des vom Rührer erzeugten Strömungsfeldes durch den oberen Wärmetauscher und nimmt von diesem stündlich eine Wärmemenge von 140 000 kJ auf. In der mechanisch durchmischten Reaktionszone stellt sich sowohl oberhalb als auch unterhalb des oberen Wärmetauschers eine Temperatur von 257 °C ein. In den nachfolgenden Reaktionszonen bis zum Austrag der Polymerschmelze aus dem VK-Rohr liegt die Temperatur im Bereich von 250 bis 275 °C. Bei einer mittleren Verweilzeit von 20 Stunden im VK-Rohr erhält man ein Polycaprolactam mit einer relativen Viskosität von 3,0.

Vergleichsbeispiel 1

Im Unterschied zu Beispiel 1 befindet sich der obere mit Diphenyl/Diphenyloxid-Dampf beheizte Wärmeaustauscher mit seiner Oberkante in einem Abstand von 3,1 m von der Rührerunterkante. Dieser Abstand entspricht dem 2,6fachen des Rohrdurchmessers. Das VK-Rohr wird wie in Beispiel 1 stündlich mit einem Gemisch aus 800 kg Caprolactam und 4 kg Wasser beschickt. Bei der gleichen Temperatur des Heizmediums von 275 °C wie in Beispiel 1 stellt sich in der mechanisch durchmischten Reaktionszone eine Temperatur von nur 250 °C ein. Das polymerisierende Reaktionsgemisch durchströmt anschließend den genannten Wärmeaustauscher von oben nach unten und nimmt dabei stündlich nur 29 000 kJ Wärme auf. Das erhaltene Polycaprolactam hat eine relative Viskosität von nur 2,76.

Beispiel 2

Man verfährt wie in Beispiel 1 beschrieben, führt jedoch stündlich 1 000 kg Caprolactam und 5 kg Wasser zu. Bei einer Verweilzeit von 16 Stunden, erhält man Polycaprolactam mit einer relativen Viskosität von 2,88.

Vergleichsbeispiel 2

Man verfährt wie in Vergleichsbeispiel 1 beschrieben, führt jedoch 1 000 kg Caprolactam und 5 kg Wasser zu. Bei einer Verweilzeit von 16 Stunden erhält man Polycaprolactam mit einer relativen Viskosität von 2,71.

**Ansprüche**

1. Verfahren zur kontinuierlichen Herstellung von Polycaprolactam durch Polymerisation von Caprolactam in einem senkrecht stehenden, von oben nach unten durchströmten Rohrreaktor, bei dem man das Caprolactam bei Polyamid bildenden Temperaturen in einer mechanisch durchmischten Zone, die einen um 30 bis 80 % größeren Durchmesser hat als der übrige Teil des Rohrreaktors und die 25 bis 40 % des Volumens

des Rohrreaktors umfaßt, zu 20 bis 70 % polymerisiert und in weiteren Wärmeaustauschzonen bis zum gewünschten Polymerisationsgrad weiterpolymerisiert und das Polycaprolactam schmelzflüssig austrägt, dadurch gekennzeichnet, daß das Reaktionsgemisch im unteren Teil der mechanisch durchmischten Reaktionszone in einem Abstand vom Rührorgan, der dem 0,3-bis 1,5-fachen des engen Teiles des Rohrdurchmessers entspricht, durch eine Wärmeaustauschzone zirkuliert.

2. Vorrichtungen zur Durchführung des Verfahrens nach Anspruch 1 aus einem senkrecht stehenden Rohr mit einem Heizmantel außen, Öffnungen für die Zuführung von Caprolactamschmelze und die Ableitung von Dämpfen im oberen Ende und Einrichtungen zum Austragen des Polycaprolactams am unteren Ende, wobei die oberen 14 % bis oberen 21 % des Rohres einen um 30 bis 80 % größeren Durchmesser aufweisen, im erweiterten Teil des Rohres ein Rührer und ein Wärmeaustauscher angeordnet sind und der restliche Teil des Rohres Einbauten zur Ausbildung eines gleichmäßigen Strömungsprofils sowie mindestens 2 Wärmeaustauscher aufweist, dadurch gekennzeichnet, daß ein Wärmetauscher oben im engen Teil des Rohres angeordnet ist und der Abstand zwischen Unterkante des Rührers und Oberkante des Wärmetauschers das 0,3 bis 1,5fache des Durchmessers des engen Teiles des Rohres beträgt.

**Claims**

1. A process for the continuous preparation of polycaprolactam by polymerizing caprolactam in a vertical tubular reactor through which the caprolactam flows downward, the caprolactam being polymerized to the extent of 20 to 70 %, at a nylon-forming temperature, in a mechanically mixed zone whose diameter is 30 to 80 % larger than that of the remaining part of the tubular reactor and which accounts for from 25 to 40 % of the volume of the tubular reactor, and being polymerized further, in additional heat exchange zones, until the desired degree of polymerization is reached, and the polycaprolactam being discharged as a melt, wherein the reaction mixture in the lower part of the mechanically mixed reaction zone is circulated through a heat exchange zone which is at a distance from the stirrer which corresponds to 0.3 to 1.5 times the diameter of the narrow part of tube.

2. Apparatus for carrying out the process as claimed in claim 1, comprising a vertical tube with an external heating jacket, orifices for introducing caprolactam melt and for discharging vapors in the upper end, and means for discharging polycaprolactam at the lower end, the upper 14 %-21 % of the tube having a diameter which is 30-80 % larger than that of the rest of the tube and the wider part of the tube being provided with a stirrer and a heat exchanger, whilst the remaining part of the tube comprises means for creating a uniform flow profile, together with 2 or more heat exchangers, wherein one heat exchanger is located at the top of the narrow part of the tube and the distance between the lower edge of the stirrer and the upper edge of the heat exchanger corresponds to 0.3-1.5 times the diameter of the narrow part of the tube.

**Revendications**

1. Procédé pour la préparation continue de polycaprolactame par polymérisation de caprolactame dans un réacteur tubulaire vertical traversé de haut en bas, dans lequel la caprolactame est polymérisée jusqu'à 20 à 70 % à des températures produisant du polyamide dans une zone à agitation mécanique, dont le diamètre est de 30 à 80 % supérieur à celui de la partie restante du réacteur tubulaire et qui représente entre 25 et 40 % du volume total du réacteur tubulaire, la polymérisation jusqu'au degré de polymérisation voulu étant poursuivie dans des zones d'échange de chaleur supplémentaires et la polycaprolactame soutirée à l'état fondu, caractérisé en ce que le mélange réactionnel circule, dans la partie inférieure de la zone de réaction à agitation mécanique, à travers une zone d'échange de chaleur à une distance de l'organe agitateur correspondant à 0,3 à 1,5 fois le diamètre du réacteur tubulaire dans sa partie étroite.

2. Installation pour la mise en œuvre du procédé suivant la revendication 1, composée d'un réacteur tubulaire vertical entouré d'une chemise de chauffage et pourvu d'ouvertures pour l'amenée de la caprolactame fondue et l'élimination des vapeurs à son extrémité supérieure et de dispositifs pour l'évacuation de la polycaprolactame à son extrémité inférieure, les 14 à 21 % supérieurs du réacteur tubulaire possédant un diamètre de 30 à 80 % plus grand, un agitateur, ainsi qu'un échangeur de chaleur, étant disposés dans la partie élargie du réacteur, tandis que des chicanes assurant un profil d'écoulement homogène et au moins deux échangeurs de chaleur sont prévus dans la partie restante du réacteur, caractérisée en ce qu'un échangeur de chaleur est disposé dans la partie supérieure de la partie étroite du réacteur tubulaire et la distance entre le bord inférieur de l'agitateur et le bord supérieur de l'échangeur de chaleur correspond à 0,3 à 1,5 fois le diamètre du réacteur tubulaire dans sa partie étroite.